# EUROPEAN PATENT SPECIFICATION

(11) **EP 2 806 364 B1**
(45) Date of publication and mention of the grant of the patent: **27.10.2021**
(21) Application number: 14169304.4
(22) Date of filing: 21.05.2014
(51) Int. Cl.: G06F 16/432, G06F 16/683, G10L 15/26

(54) **Method and apparatus for managing audio data in electronic device**
Verfahren und Vorrichtung zur Verwaltung von Audiodaten in einer elektronischen Vorrichtung
Procédé et appareil de gestion de données audio dans un dispositif électronique

(30) Priority: 21.05.2013 KR 20130057369
(43) Date of publication of application: 26.11.2014
(73) Proprietor: Samsung Electronics Co., Ltd., Gyeonggi-do 443-742 (KR)
(72) Inventor: Kim, Pilwon, 443-742 Gyeonggi-do (KR)
(74) Representative: Nederlandsch Octrooibureau

(56) References cited:
- US-A1- 2007 256 008
- None

## Description

### BACKGROUND OF THE INVENTION

### 1. Field of the Invention

The present invention relates generally to an audio data managing method and apparatus of an electronic device and, more particularly, to a method and an apparatus for managing audio data in an electronic device, which allow preliminary identification of contents of audio data.

### 2. Description of the Related Art

With the remarkable development in the information communication technologies and semiconductor technologies, electronic devices can now store thousands of various data files, which include, for example, document data files, image data files, video data files, and audio data files. The storing of such a large number of data files has given users of the electronic devices trouble in managing the data. For example, a user of the electronic device may feel trouble or inconvenience in finding data which the user wants to obtain. In order to overcome such trouble or inconvenience and efficiently manage data, the prior art electronic devices allow making of a filename of each data file or inputting separate tag information thereof so that the user of the electronic device can identify the contents of the data.

Conventional electronic devices also provide a preview function for preliminarily showing rough contents of document data, image data, or video data, through a thumbnail image. Through the preview function, a user of the electronic device can preliminarily identify the contents of document data, image data, or video data.

US 2007/0256008 discloses a method wherein recorded audio information is managed by annotation markers. The recorded audio information is annotated with at least one marker and the annotated audio information is saved in an electronically searchable file.

However, there are no electronic devices that provide a preview function for audio data. As a result, users of the electronic devices still have the inconvenience of recording a detailed filename of audio data or inputting separate tag information of the audio data.

### SUMMARY OF THE INVENTION

The present invention has been made to address the above-described problems and disadvantages, and to provide at least the advantages described below. According to the invention there are provided a method and an apparatus for managing audio data in an electronic device, which allow preliminary identification of contents of audio data through a text, as defined in the attached claims.

### BRIEF DESCRIPTION OF THE DRAWINGS

The above and other aspects, features and advantages of the present invention will be more apparent from the following detailed description in conjunction with the accompanying drawings, in which:
FIG 1 is a block diagram illustrating a configuration of an electronic device according to an embodiment of the present invention;
FIG 2 is a flowchart illustrating a method of providing a preview of audio data of an electronic device according to an embodiment of the present invention;
FIGs. 3A to 3C illustrate preview examples of audio data of an electronic device according to an embodiment of the present invention;
FIG 4 is a flowchart illustrating a method of setting a filename when audio data of an electronic device is generated according to an embodiment of the present invention;
FIG 5 illustrates a screen example for describing a method of setting a filename when audio data of an electronic device is generated according to an embodiment of the present invention;
FIG 6 is a flowchart illustrating a method of changing a filename of audio data of an electronic device according to an embodiment of the present invention;
FIG 7 illustrates a screen example for describing a method of changing a filename of audio data of an electronic device according to an embodiment of the present invention; and
FIG 8 is a flowchart illustrating a method of searching for audio data of an electronic device according to an embodiment of the present invention.

### DETAILED DESCRIPTION OF EMBODIMENTS OF THE PRESENT INVENTION

Hereinafter, embodiments of the present invention will be described with reference to the accompanying drawings. It should be noted that the same elements will be designated by the same reference numerals although they are shown in different drawings. Further, in the following description of the present invention, a detailed description of known functions and configurations incorporated herein will be omitted when it may make the subject matter of the present invention unclear.

Meanwhile, embodiments of the present invention shown and described in this specification and the drawings correspond to specific examples presented in order to easily explain technical contents of the present invention, and to help comprehension of the present invention, but the claims determine the scope of the present invention.

Prior to the detailed description of the present invention, the electronic device may be a terminal providing a voice recognition function, such as a mobile communication terminal, a smart phone, a tablet Personal Computer (PC), a hand-held PC, a Portable Multimedia Player (PMP), a Personal Digital Assistant (PDA), a notebook PC, and the like.

As described below, a method and an apparatus for managing audio data in an electronic device according to an embodiment of the present invention allow preliminary identification of contents of audio data through a text. That is, in the present invention, audio data is converted to a text and preview data of the audio data is generated and stored based on the converted text, so that the stored preview data can be provided in response to a request for a preview. Further, in the present invention, a part of the text converted from the audio data can be set as a filename of the audio data.

Moreover, in the present invention, the converted texts can be displayed with an indication that each of the converted texts is distinguished by a talker. Furthermore, in the present invention, audio data can be searched for based on a text converted from the audio data. As a result, the present invention can enhance the convenience of the user in the management of audio data.

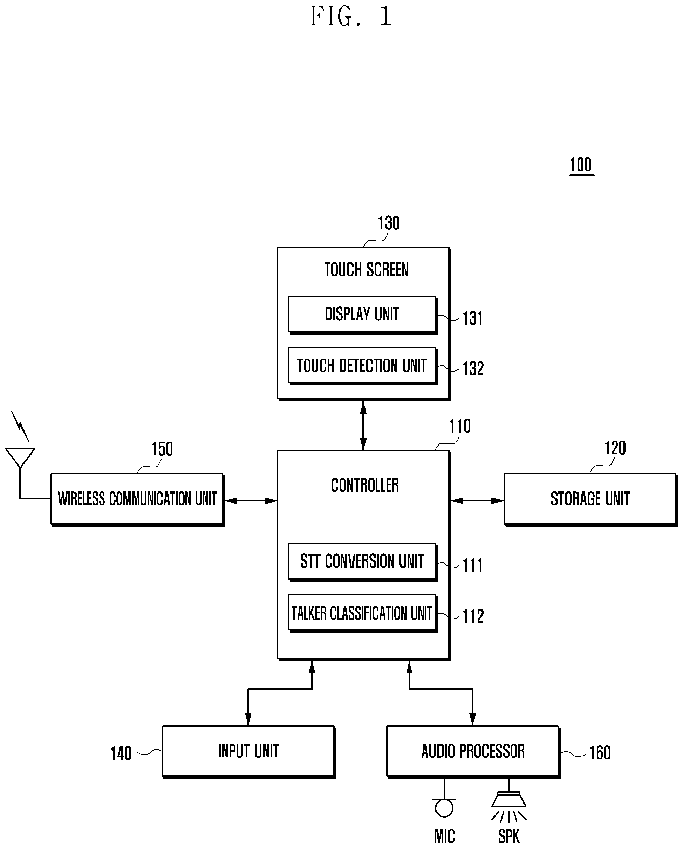

FIG 1 is a block diagram illustrating a configuration of an electronic device according to an embodiment of the present invention.

Referring to FIG 1, an electronic device 100 according to an embodiment of the present invention includes a controller 110, a storage unit 120, a touch screen 130, an input unit 140, a wireless communication unit 150, and an audio processor 160. The touch screen 130 may include a display unit 131 and a touch detection unit 132, and the controller 110 may include a Speech-To-Text (STT) conversion unit 111 and a talker classification unit 112.

The audio processor 160 is connected to a speaker SPK for outputting an audio signal transmitted or received during a communication, an audio signal included in a received message, an audio signal according to reproduction of audio data (or an audio file) stored in the storage unit 120, or an audio signal included in video data (or a video file), and to a microphone MIC for collecting a user's voice or other audio signals. The audio processor 160 may support a function of recording audio data.

The wireless communication unit 150 supports a wireless communication function of the electronic device 100. For example, the wireless communication unit 150 may include a short-range wireless communication module, such as a Bluetooth module, a ZigBee module, a Near Field Communication (NFC) module, or a Wireless Fidelity (Wi-Fi) module, when the electronic device 100 supports a short-range wireless communication, and may include a mobile communication module when the electronic device 100 supports a mobile communication function (for example, a function of a mobile communication with the 3G or 4G standards). Meanwhile, when the electronic device 100 does not support the Speech-To-Text (STT) conversion function and the talker classification function, the wireless communication unit 150 may transmit audio data to a server supporting the STT conversion function and the talker classification function and receive a result thereof (for example, a text converted from the audio data or preview data in the form of an image or a video) from the server.

The input unit 140 generates a key signal related to a user setting and a function control of the electronic device 100 and transfers the generated key signal to the controller 110. To this end, the input unit 140 may include various input keys and function keys for inputting of numerals or character information and setting of various functions. The function keys may include a direction key, a side key, and a shortcut key for execution of particular functions. The input unit 140 may be configured by one or a combination of a qwerty keypad, a 3^{∗}4 keypad, a 4^{∗}3 keypad, a ball joystick, an optical joystick, a wheel key, a touch key, a touch pad, a touch screen, and other input means. Also, when the electronic device 100 supports a full touch screen, the input unit 140 may include only a part of the function keys, such as a volume key, a power key, a menu key, a cancellation key, and a home key. In particular, the input unit 140 according to the present invention generates various input signals for controlling various procedures, including a preview of audio data, setting of a filename of audio data, changing of a filename of audio data, and searching of audio data, and transmits the generated input signals to the controller 110.

The touch screen 130 performs an input function and a display function. To this end, the touch screen 130 includes the display unit 131 and the touch detection unit 132.

The display unit 131 displays various menus of the electronic device 100, information input by the user, or information to be provided to the user. The display unit 131 may be formed by a Liquid Crystal Display (LCD), an Organic Light Emitted Diode (OLED), or an Active Matrix Organic Light Emitted Diode (AMOLED). The display unit 131 provides various screens for use of the electronic device 100, which include, for example, a home screen, a menu screen, and a phone-call screen. In particular, the display unit 131 according to an embodiment of the present invention displays a preview screen of audio data, a screen for generation of a filename of audio data, a screen for changing of a filename of audio data, and a screen for searching for audio data. Such various screens will be described below in detail with reference to the drawings illustrating examples of the screens.

The touch detection unit 132 is a device for providing an input function, and generates a touch event and transmits the generated touch event to the controller 110 when a touch input device, such as a user's finger, a stylus, or an electronic pen, contacts or approaches the touch detection unit 132. Specifically, the touch detection unit 132 detects the occurrence of a touch event through a change in physical properties (for example, a capacitance or a resistance value) according to contact or approaching of a touch input device, and transfers the touch event type (e.g. tap, drag, flick, long touch, double-touch, multi-touch, etc.) and touch location information of the occurred touch to the controller 110. The touch detection unit 132 as described above is obvious to those skilled in the art, so a detailed description thereof is omitted here.

The storage unit 120 stores an Operating System (OS) of the electronic device 100 and application programs necessary for other optional functions, such as a sound reproduction function, an image or video reproduction function, and a broadcast reproduction function. Further, the storage unit 120 stores various data, such as video data, game data, audio data, and movie data. In particular, the storage unit 120 according to the present invention stores a recording application, an STT conversion application for converting audio data to a text, and a talker classification application for classifying and/or recognizing a talker from audio data.

The storage unit 120 also stores preview data of audio data. The preview data may be generated and stored when new audio data is generated or audio data is downloaded. Also, in response to a request for a preview of audio data, the preview data may be generated if the audio data has no preview data. The preview data of the audio data may be formed as a text generated by converting the whole or at least a part of the audio data, or as an image (for example, a thumbnail image) or a video image (for example, a slide text in which the text moves in a predetermined direction) converted from the text. The preview data of the audio data may be generated by converting a predetermined section of the audio data from the start point of the audio data into a text. Otherwise, the preview data of the audio data may be generated by converting a predetermined section of the audio data from a position at which the reproduction of the audio data is stopped (or terminated) into a text. The predetermined section may be set by time (for example, 10 seconds) or the number of characters or letters (for example, 30 letters).

When the audio data includes a plurality of talkers, the storage unit 120 may store a talker classification program for classifying and displaying converted texts according to the talkers. The talker classification program classifies talkers through tone analysis. Alternatively, when a phone call is recorded, the talker classification program may classify talkers according to whether audio data is received through the microphone MIC or the wireless communication unit 150. For example, the talker classification program may classify audio data received through the microphone MIC as audio data of the user and audio data received through the wireless communication unit 150 as audio data of a counterpart. In this event, the talker classification program may recognize the counterpart through the phone number. Alternatively, the storage unit 120 may store a talker database for recognizing talkers. The talker database may store a tone property of each talker.

The controller 110 controls general operations of the electronic device 100 and a signal flow between internal blocks of the electronic device 100, and performs a data processing function for processing data. For example, the controller 110 may be configured by a Central Processing Unit (CPU), an application processor, etc. The controller 110 may be configured by a single core processor or a multi-core processor. The controller 110 controls a preview function of audio data. More specifically, the controller 110 converts at least a part of the audio data to a text through a voice recognition function, and generates and stores the converted text as preview data. Thereafter, the controller 110 identifies whether pre-stored preview data exists in response to a request for a preview of the audio data. When the pre-stored preview data exists, the controller 110 performs control such that the pre-stored preview data is displayed. Meanwhile, when the preview data does not exist, the controller 110 performs a process of generating the preview data of the audio data.

Further, the controller 110 controls a process of generating and changing a filename of the audio data. More specifically, when there is a request for generating or changing a filename of the audio data, the controller 110 converts a part of the audio data to a text and displays the converted text and sets a part of the text selected from the displayed text as the filename of the audio data which has been requested to be generated or changed.

Further, the controller 110 controls a process of searching for audio data. More specifically, after receiving a search word through a search word input window and converting the audio data to a text, the controller 110 identifies whether the converted text includes the search word. Thereafter, the controller 110 displays audio data including the search word as a search result.

In order to control the above described processes, the controller 110 includes the Speech-To-Text (STT) conversion unit 111 and the talker classification unit 112. The STT conversion unit 111 converts audio data to a text. That is, the SST conversion unit 111 supports a voice recognition function. The talker classification unit 112 is used for distinguishing converted texts by talkers, respectively, and displaying the distinguished converted texts. To this end, the talker classification unit 112 analyzes tones of the audio data to classify a plurality of talkers included in the audio data. Meanwhile, when the storage unit 120 stores the talker database for recognizing talkers, the talker classification unit 112 provides a talker recognition function. Through the talker recognition function, the controller 110 displays the converted texts classified according to respective talkers. Alternatively, in audio data generated by recording a phone call, the talker classification unit 112 recognizes a talker through a call counterpart's phone number.

Meanwhile, although not illustrated in FIG. 1, the electronic device 100 may further selectively include components having additional functions, such as a camera module for photographing an image/video or performing a video call, a broadcast reception module for receiving a broadcast, and a digital sound source reproduction module including an MP3 module. While all components cannot be listed since they may be variously modified according to the convergence trend of digital devices, the electronic device 100 according to the present invention may further include components at the equivalent level to the above listed components.

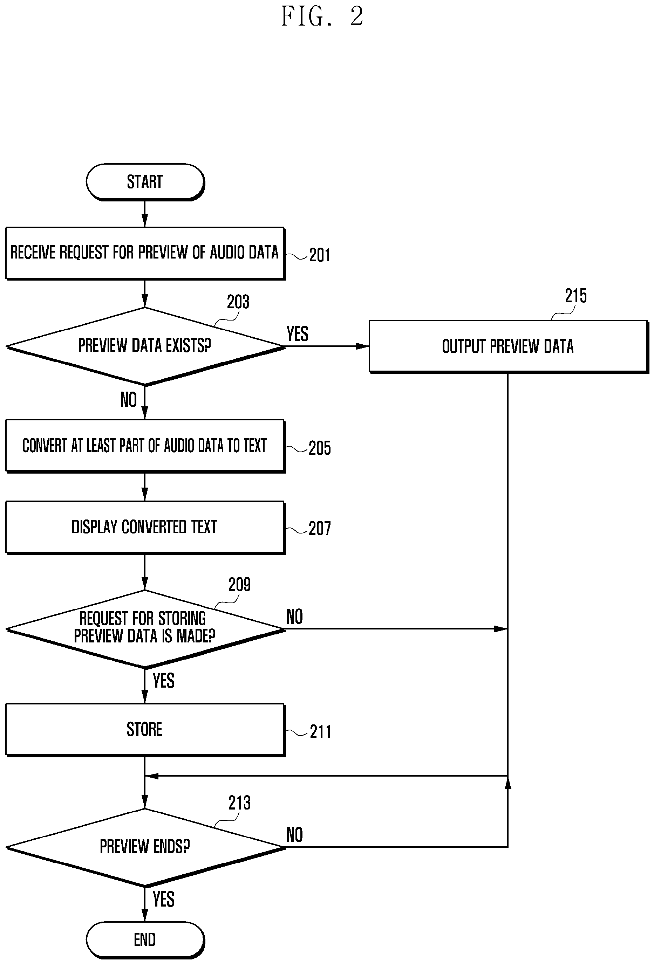

FIG. 2 is a flowchart illustrating a method of providing a preview of audio data according to an embodiment of the present invention.

Referring to FIG. 2, the controller 110 of the electronic device 100 according to an embodiment of the present invention receives a request for a preview of audio data in step 201. The request for the preview may be received when an audio data list is set to be displayed in a thumbnail form, a pointing device (for example, a mouse) is located at the audio data or a touch input device (a mouse, a finger, a stylus pen, an electronic pen, or the like) approaches the audio data within a predetermined distance.

The controller 110 determines whether pre-stored preview data exists in step 203. The pre-stored preview data may be a text converted from at least a part of the audio data, or an image or a video generated based on the text. The video may be an image in which a text moves in a predetermined direction at a predetermined speed, an image in which a text is output like an action of writing a letter by the user, or an image in which a text is changed in a predetermined unit (for example, 10 letters). However, the present invention is not limited thereto.

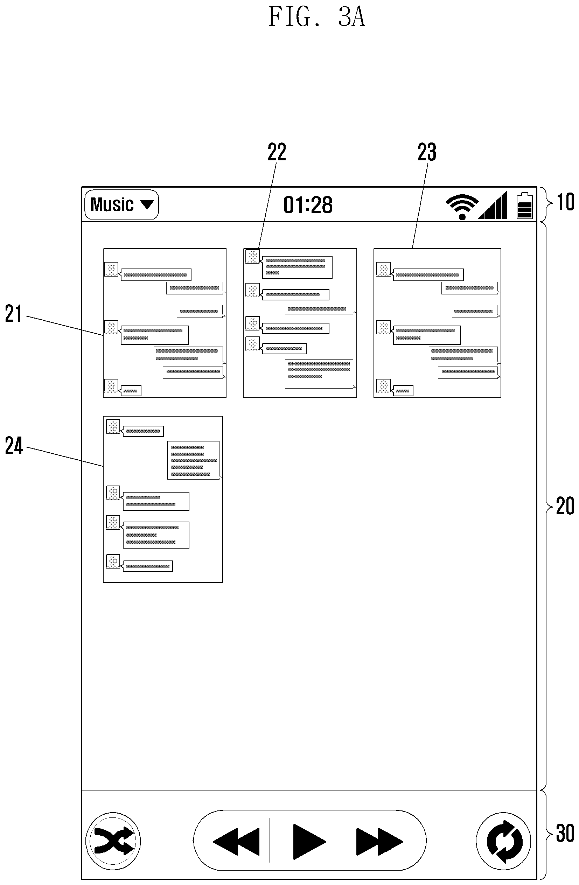

When the preview data exists in step 203, the controller 110 outputs preview data mapped into the audio data in step 215 and proceeds to step 213 described below. A method of displaying the preview data will be described below with reference to FIGs. 3A to 3C. Meanwhile, when the preview data does not exist in step 203, the controller 110 converts at least a part of the audio data to a text in step 205. At this time, the controller 110 may convert a predetermined section of the audio data from a start position of the audio data to the text. Alternatively, the controller 110 may convert a predetermined section of the audio data from a position where a reproduction of the audio data is stopped to a text. The predetermined section may be set by time (for example, 10 seconds) or the number of characters or letters (for example, 30 letters).

The controller 110 displays the converted text in step 207. The controller 110 determines whether a request for storing the preview data is received in step 209. When the request for storing the preview data is received, the controller 110 stores the converted text as the preview data of the audio data in step 211. In contrast, when the request for storing the preview data is not received, the controller 110 proceeds to step 213 to determine whether the preview is terminated. When the preview is not terminated, the controller 110 may remain in step 213. In contrast, when the preview is terminated, the controller 110 terminates a process of displaying the preview of the audio data.

Meanwhile, although it has been described that the controller 110 determines whether the preview data exists in response to a request for the preview, generates the preview data of the audio data when the preview data does not exist, and stores the generated preview data according to a request for storing the preview data by the user, the present invention is not limited thereto. For example, when new audio data is generated (for example, recorded) or audio data is downloaded, the controller 110 may generate preview data of the new audio data or the downloaded audio data and automatically store the generated preview data. Further, the controller 110 may update the preview data based on a position where the audio data is reproduced last. For example, when a reproduction of the audio data is stopped or terminated during the reproduction, the controller 110 may convert a predetermined section (for example, time or the number of letters) of the audio data from a position where the reproduction is stopped or terminated to a text, so as to update preview data.

FIGs. 3A to 3C illustrate examples of displaying a preview of audio data of the electronic device according to an embodiment of the present invention.

Referring to FIG. 3A first, when a request for displaying an audio data list is received in a state where a setting is made such that the list is displayed through the preview of audio data, the controller 110 controls the display unit 131 such that a preview list screen of the audio data is displayed. The preview list screen includes an indicator area 10 which displays icons indicating remaining battery power, a time, and a Received Signal Strength Indicator (RSSI), a list area 20 which displays an audio data list, and a control area 30 which includes a plurality of control buttons (for example, repeat, rewind, play, forward, and refresh) controlling reproduction of the audio data. The list area 20 may include a plurality of preview data 21, 22, 23, and 24 indicating the audio data. The preview data may be a thumbnail image. Meanwhile, in the case of the preview data 21, 22, 23, and 24 illustrated in FIG. 3A, texts converted from the audio data are classified according to talkers and displayed similarly to the displayed interactive messages. To this end, the controller 110 classifies the talkers through a tone analysis. Alternatively, the controller 110 may recognize the talker through a talker recognition function, or may recognize the talker through a phone number in a case where a call is recorded. At this time, the controller 110 adds talker information to the preview data by using phonebook information. For example, the controller 110 may identify whether the talker recognized through the talker recognition function or the phone number is stored in the phonebook. Thereafter, when the talker is stored in the phonebook, the controller 110 may identify whether a picture (hereinafter referred to as a phonebook image) of the talker is registered in the phonebook. When the phonebook image of the talker is registered, the controller 110 adds the registered phonebook image to the preview data as talker information. When the phonebook image of the talker is not registered, the controller 110 may add a phone number or a default image to the preview data as the talker information.

Meanwhile, the present invention is not limited to displaying the converted texts distinguished by talkers, respectively. For example, when the electronic device 100 does not provide a talker classification function, the preview data may be displayed in a form where the converted texts are listed.

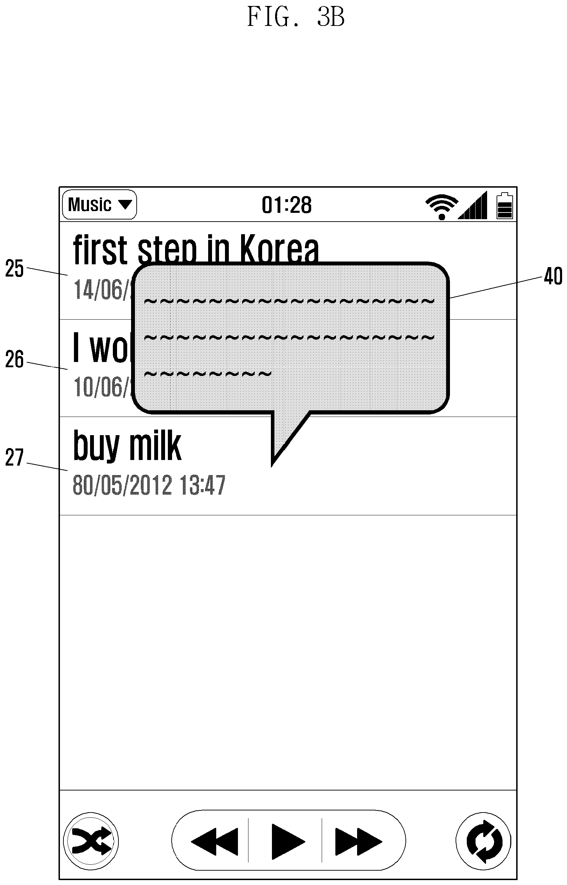

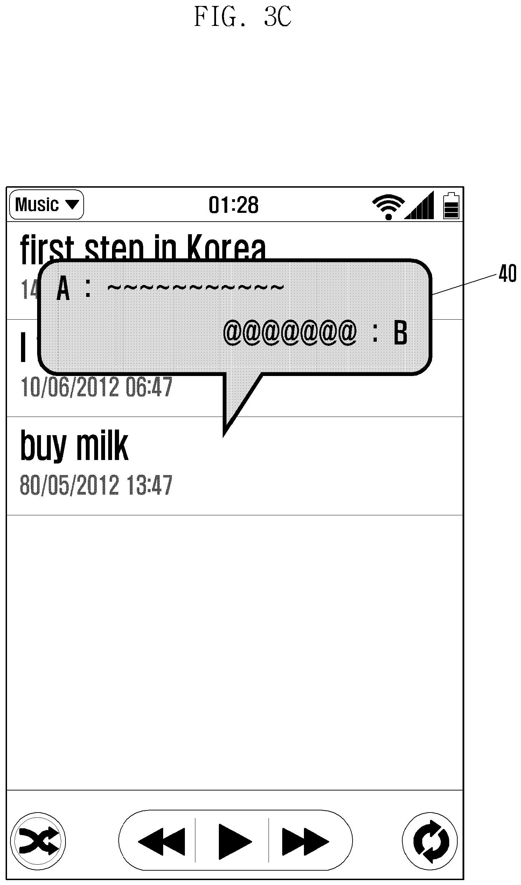

Referring to FIG. 3B, the controller 110 displays a preview of audio data on a normal list screen. The normal list displays the audio data through a filename of the audio data and date information. For example, as illustrated in FIG. 3B, the normal list screen may display a plurality of audio data 25, 26, and 27 through file names thereof and date information. When a pointing device (for example, a mouse) is located at one of the plurality of audio data or a touch input device (a finger, a stylus, an electronic pen, or the like) approaches one of the plurality of audio data within a predetermined distance, the controller 110 outputs a preview popup window 40 of the corresponding audio data 27. The preview popup window 40 displays the converted texts in a list form. However, the present invention is not limited thereto. For example, as illustrated in FIG. 3C, the preview popup window 40 may display the converted texts distinguished by talkers, respectively. Alternatively, the preview popup window 40 may display converted texts in the form of thumbnail images as shown in FIG. 3A.

As described above with reference to FIGs. 3A to 3C, the user of the electronic device 100 according to an embodiment of the present invention can preliminarily identify contents of the audio data through the preview data 21, 22, 23, and 24 or the preview popup window 40 without the reproduction of the audio data.

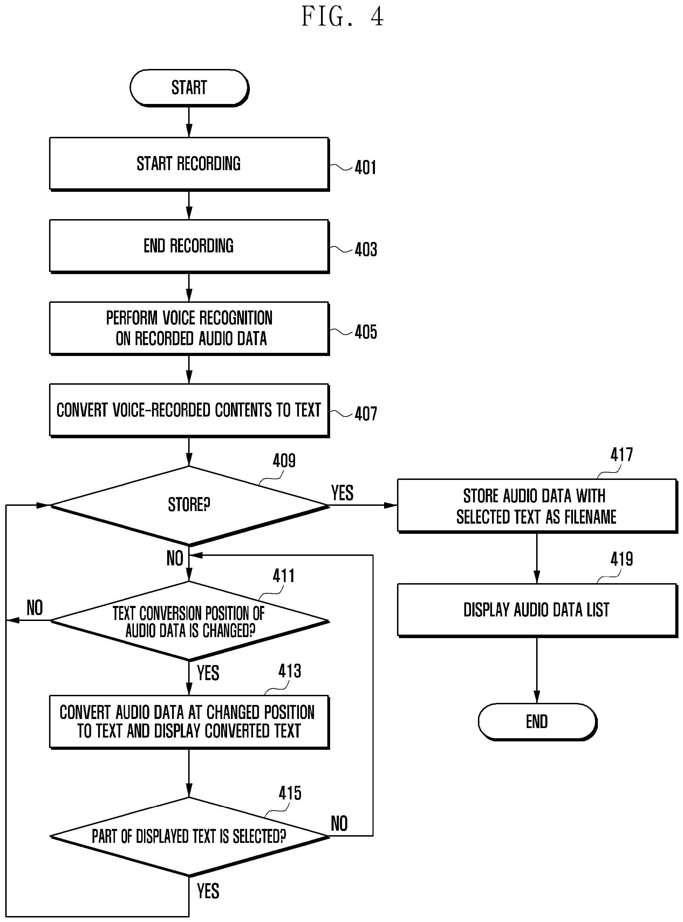

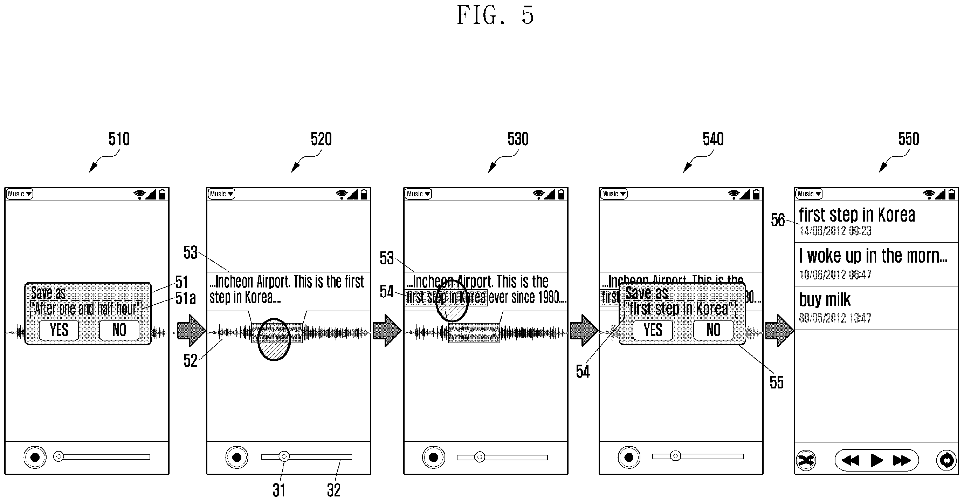

FIG. 4 is a flowchart illustrating a method of setting a filename when audio data of the electronic device is generated according to an embodiment of the present invention, and FIG. 5 illustrates a screen example for describing the method of setting the filename when the audio data of the electronic device is generated according to an embodiment of the present invention.

Referring to FIGs. 4 and 5, the controller 110 of the electronic device 100 according to an embodiment of the present invention receives a request for starting recording of audio data in step 401. At this time, the controller 110 collects an audio signal input through the microphone MIC of the audio processor 160 and stores the collected audio signal. Alternatively, during a call, the controller 110 may collect a reception sound received through the wireless communication unit 150 and a transmission sound input through the microphone MIC and store the reception sound and the transmission sound.

While the audio data is continuously recorded, the controller 110 receives a request for terminating the recording of the audio data in step 403. When receiving the request for terminating the recording, the controller 110 performs voice recognition on the recorded audio data in step 405, and converts voice-recognized contents to a text in step 407. For example, the controller 110 may control the STT conversion unit 111 such that the recorded audio data is converted to the text. At this time, the controller 110 performs a control such that audio data for a predetermined duration (for example, ten seconds) from a start position of the recorded audio data is converted to the text. Alternatively, the controller 110 may perform a control such that audio data in the predetermined duration of time from a time point when an audio signal that is greater than or equal to a predetermined level is detected is converted to the text. This is because the audio data may include a section in which only a noise signal is recorded without an input of an audio signal.

Next, the controller 110 determines whether to store the recorded audio data in step 409. At this time, the controller 110 may provide the converted text through a filename of the recorded audio data. For example, as indicated by screen 510 of FIG. 5, the controller 110 may output a popup window 51 asking about whether to store the recorded audio data. The popup window 51 includes a converted text 51a ("After one and a half hour").

When it is determined to store the recorded audio data in step 409, the controller 110 stores the audio data in step 417 and output an audio data list screen in step 419. In contrast, when it is determined not to store the recorded audio data in step 409, the controller 110 determines whether a text conversion position of the audio data is changed in step 411. When the text conversion position of the audio data is changed, the controller 110 converts the audio data at the changed position to the text and displays the converted text in step 413. For example, as indicated by screen 520 of FIG. 5, when a touch is detected on a visualized image 52 of the audio data, audio data in a predetermined section from a touched position is converted to a text and the converted text is displayed on an upper end of the visualized image 52 through a speech bubble 53. At this time, the controller 110 performs a display such that a part converted to the text from the visualized image 52 is visually distinguished (for example, highlighted) from another part. The highlighted part of the visualized image 52 may be connected with a tail (protrusion part) of the speech bubble 53.

Meanwhile, although it has been described that the text conversion position is changed by touching the visualized image 52 as indicated by the screen 520, the present invention is not limited thereto. For example, the text conversion position may be changed according to a movement of a reproduction bar 31 along a time line 32.

The controller 110 determines whether a part of the converted and displayed text is selected in step 415. When the part of the converted and displayed text is not selected, the controller 110 returns to step 411. In contrast, when the part of the converted and displayed text is selected, the controller 110 returns to step 409. For example, when a partial text 54 ("first step in Korea") is selected in the speech bubble 53 by the user as indicated by a screen 530 of FIG. 5, the controller 110 outputs a popup window 55 asking about whether to store the partial text as indicated by a screen 540 of FIG. 5. The controller 110 may automatically select a partial text from a position touched by the user in units of words. Alternatively, the controller 110 may automatically select a partial text from a first blank before or after a touch position. Thereafter, the user may change a range (a start position of an end position of the text) of the text automatically selected by the controller 110.

The popup window 55 includes the selected partial text 54 ("first step in Korea"). When "YES" is selected in the popup window 55, the controller 110 outputs an audio data list screen as indicated by a screen 550 of FIG. 5. Referring to the screen 550, the generated audio data 56 with the selected partial text 54 as a filename is displayed on an uppermost end of the audio data list. Information on a date and a time when the audio data is generated is also displayed below the filename of the generated audio data 56.

Meanwhile, although it has been described that the popup window 55 asking about whether to store the partial text 54 is directly output once the partial text 54 is selected in the speech bubble 53, the present invention is not limited thereto. For example, the controller 110 may output the popup window 55 when the partial text 54 is selected and then a storage command is received. Further, although it has been illustrated in FIG. 5 that the converted texts are listed and displayed on the speech bubble 53, the converted texts may be displayed such that the converted texts are classified according to respective talkers as illustrated in FIGs. 3A and 3C.

According to the aforementioned embodiments of the present invention, when new audio data is recorded and stored, contents of the recorded audio data can be preliminarily identified through a text, and a part of the text may be set as a filename. Accordingly, the user of the electronic device 100 according to an embodiment of the present invention can easily set a filename of new audio data.

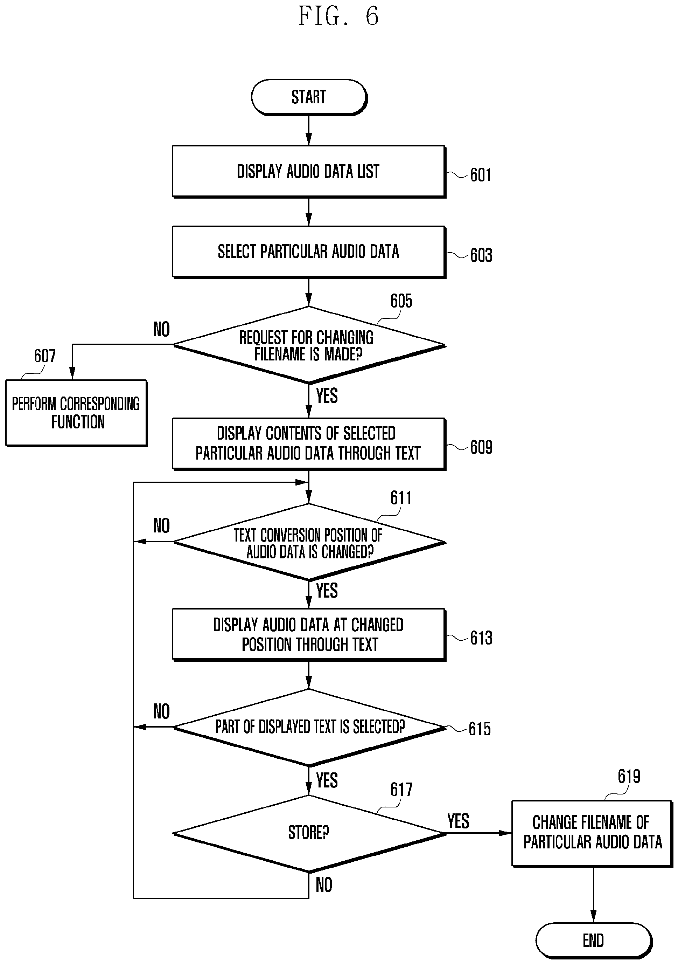

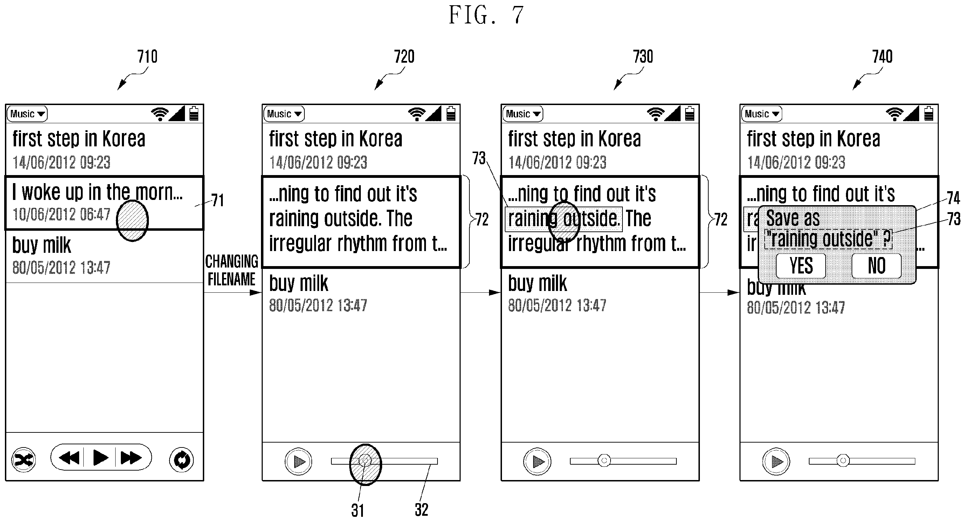

FIG. 6 is a flowchart illustrating a method of changing a filename of audio data of the electronic device according to an embodiment of the present invention, and FIG. 7 illustrates a screen example for describing the method of changing the filename of the audio data of the electronic device according to an embodiment of the present invention.

Referring to FIGs. 6 and 7, the controller 110 of the electronic device 100 according to an embodiment of the present invention displays an audio data list including a plurality of audio data in step 601. The controller 110 detects a selection of particular audio data in step 603.

Thereafter, the controller 110 determines whether a request for changing a filename is received in step 605. The request for changing the filename of the particular audio data may be made through a menu or a preset touch input (for example, a long touch). When the request (command) for changing the filename is not received, the controller 110 performs a corresponding function in step 607. For example, the controller 110 may perform a function of reproducing, deleting, or moving the selected particular audio data or maintain a standby state according to a request of the user. In contrast, when the request (command) for changing the filename is received, the controller 110 converts the selected particular audio data to a text and displays the converted text in step 609. For example, when the request for changing the filename of particular audio data 71 is received in a list screen as indicated by a screen 710 of FIG. 7, the controller 110 may expand a region where the particular audio data 71 is displayed, convert at least a part of the particular audio data 71 to a text, and display the converted text on the expanded region 72 as indicated by a screen 720 of FIG. 7.

The controller 110 then determines whether a text conversion position of the audio data is changed in step 611. When the text conversion position of the audio data is changed, the controller 110 converts the audio data at the changed position to the text and displays the converted text in step 613. For example, the controller 110 may convert audio data in a predetermined section from a position of the reproduction bar 31 on the time line 32 to the text and display the converted text on the expanded region 72.

The controller 110 then determines whether a part of the text displayed on the expanded region 72 is selected in step 615. When the part of the text displayed on the expanded region 72 is not selected, the controller 110 returns to step 611. In contrast, when the part of the text displayed on the expanded region 72 is selected, the controller 110 determines whether to store the part of the text in step 617. When it is determined not to store the part of the text, the controller 110 returns to step 611. In contrast, when it is determined to store the part of the text, the controller 110 changes a filename of the particular audio data 71 into the selected partial text in step 619. For example, when a partial text 73 ("raining outside") is selected in the expanded region 72 by the user as indicated by a screen 730 of FIG. 7, the controller 110 outputs a popup window 74 asking about whether to store the partial text as indicated by a screen 740 of FIG. 7. The popup window 74 includes the selected partial text 73 ("raining outside"). When "YES" is selected in the popup window 74, the controller 110 changes a filename "I woke up in the morn..." of the particular audio data 71 into "raining outside".

Meanwhile, although it has been described that the popup window 74 asking about whether to store the partial text 73 is directly output once the partial text 73 is selected in the expanded region 72, the present invention is not limited thereto. For example, the controller 110 may output the popup window 74 asking about whether to store the partial text 73 when the partial text 73 is selected and then a storage command is received. Further, although it has been illustrated that the converted texts are listed and displayed on the expanded region 72, the converted texts may be displayed such that the converted texts are classified according to respective talkers as illustrated in FIGs. 3A and 3C. In addition, although it has been described in FIG. 7 that the region where the selected particular audio data 71 is displayed is expanded and the text is displayed on the expanded region, the present invention is not limited thereto. For example, the controller 110 may display the screen 520 of FIG. 5 when receiving a request for changing the filename of the particular audio data.

The user of the electronic device according to the aforementioned embodiments of the present invention can preliminarily identify contents of the audio data through a text when a filename of the audio data is changed and easily change the filename of the audio data by using a part of the text.

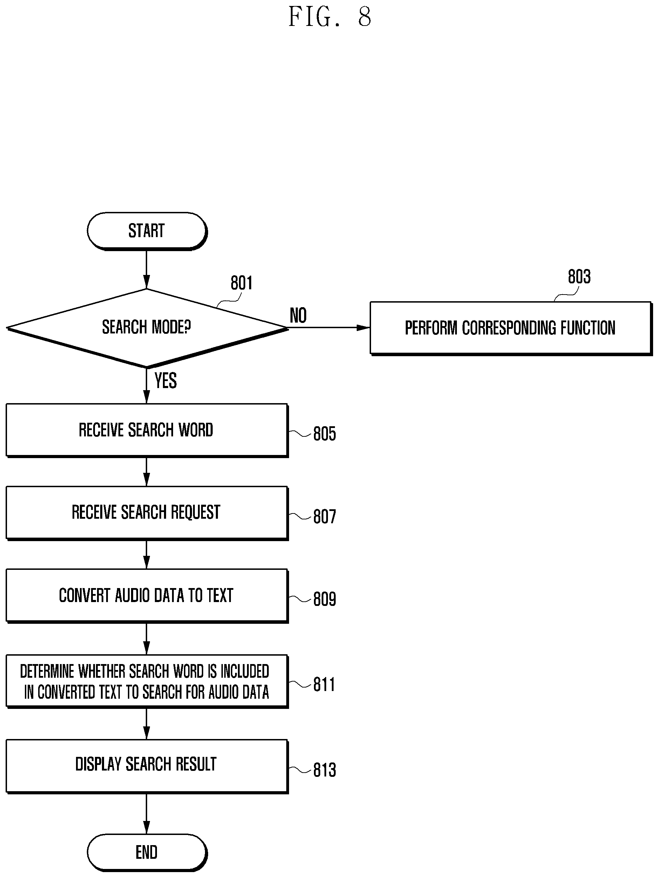

FIG. 8 is a flowchart illustrating a method of searching for audio data of the electronic device according to an embodiment of the present invention.

Referring to FIG. 8, the controller 110 of the electronic device 100 according to an embodiment of the present invention determines whether a search mode is activated (ON) in step 801. When the search mode is not activated, the controller 110 performs a corresponding function in step 803. For example, the controller 110 may perform a function of reproducing or deleting the audio file, or changing a filename, or maintain a standby state according to a request of the user. In contrast, when the search mode is activated, the controller 110 receives a search word input by the user in step 805.

The controller 110 receives a search request in step 807. When the search request is received, the controller 110 converts the audio data stored in the storage unit 120 to texts in step 809.

The controller 110 determines whether the search word is included in the converted texts to search for audio data in step 811, and then displays a search result in step 813.

Meanwhile, although it has been described that the audio data is converted to the text and then audio files including the search word are found when a search request is made, the text converted from the recorded audio data may be mapped with corresponding audio data and pre-stored in order to increase a search efficiency of the audio data in another embodiment of the present invention. In this case, step 809 may be omitted.

The user of the electronic device 100 according to the aforementioned embodiments of the present invention can search for audio data based on actual contents of the audio data, not a filename of the audio data through a search function. Accordingly, the user can easily search for audio data including contents which the user desires.

Although it has been described that only audio data is found when the search request is made, the present invention is not limited thereto. For example, in another embodiment of the present invention, other data (for example, a document file, an image file, and the like) including the search word may be also found in a search mode. Alternatively, in yet another embodiment of the present invention, a menu for setting whether to search for audio data is provided, and the audio data may be found when the electronic device is set to search for the audio data.

In addition, although the embodiments of the present invention have described the audio data as an example, the present invention may be applied to video data including both audio data and image data. When the present invention is applied to the video data, the electronic device may provide at least one of an image and a text in a preview form.

The method of managing audio data of the electronic device according to the embodiments of the present invention may be implemented in a form of a program command which can be executed through various computer means and be recorded in a computer-readable recording medium. The computer-readable recording medium may include a program command, a data file, and a data structure alone or a combination thereof. Meanwhile, the program command recorded in the recording medium is specially designed and configured for the present invention, but may be used after being known to those skilled in computer software fields. The computer-readable recording medium includes magnetic media such as hard disks, floppy disks and magnetic tapes, optical media such as a Compact Disc Read-Only Memory (CD-ROM) and a Digital Versatile Disc (DVD), magneto-optical media such as floptical disks, and hardware devices such as a Read-Only Memory (ROM), a Random Access Memory (RAM) and a flash memory, which are specially configured to store and perform program commands. Further, the program command includes a machine language code generated by a compiler and a high-level language code executable by a computer through an interpreter and the like. The hardware devices may be configured to operate as one or more software modules to perform the operations of the present invention.

Although the method and the apparatus for managing audio data of the electronic device according to the embodiments of the present invention have been described through the specification and drawings by using the specific terms, the embodiments and the terms are merely used as general meanings to easily describe technical contents of the present invention and assist understanding of the present invention, and the present invention is limited only by the attached claims.

## Claims

1. A method of managing audio data in an electronic device, the method comprising:
converting (205) at least a part of audio data to a text;
storing (211) the converted text as preview data of the audio data;
adding talker information about at least one talker associated with the audio data to the preview data; and
displaying the preview data by classifying each talker according to the talker information in response to a request for a preview of the audio data,
wherein the electronic device provides a phonebook function for showing a phonebook image and wherein adding the information related to the talker comprises:
recognizing a talker through a talker recognition function or a phone number, and
adding the phonebook image of the recognized talker to the preview data as the information related to the talker.

2. The method of claim 1, wherein storing the converted text as the preview data of the audio data comprises:
displaying (207) the converted text;
determining (209) whether to store the displayed text as the preview data of the audio data according to an input of a user; and
when it is determined to store the displayed text as the preview data (209-YES), storing (211) the displayed text as the preview data of the audio data.

3. The method of claim 2, wherein converting at least the part of the audio data comprising words to the text comprises analyzing a tone of the audio data for distinguishing one or more talkers expressing the words; and
wherein storing the displayed text as the preview data of the audio data comprises storing the converted texts distinguished by the respective talkers according to a result of the analysis of the tone of the audio data.

4. The method of claim 3, wherein storing the converted text distinguished by the respective talkers comprises adding information related to the talker to the preview data.

5. The method of claim 1, further comprising, when a reproduction of the audio data is terminated or stopped before the reproduction is completed, converting audio data in a predetermined section from a position where the reproduction is terminated or stopped to a text, so as to update the preview data.

6. The method of claim 1, further comprising:
detecting (605) a request for changing a filename of particular audio data or a request for setting a filename of recorded audio data;
converting at least a part of the particular audio data or the recorded audio data to a text and displaying (609) the converted text;
detecting (615) a selection of a part of the displayed text; and
changing (619) the filename of the particular audio data into the selected part of the text or setting the selected part of the text as the filename of the recorded audio data.

7. The method of claim 6, wherein converting at least the part of the particular audio data or the recorded audio data to the text and displaying the converted text comprises converting audio data in a predetermined section to a text according to a movement of a reproduction bar or a touch event detected on a visualized image of the audio data.

8. The method of claim 1, further comprising:
receiving (801) a request for activating a search mode;
receiving (805, 807) a search word and a search request;
converting (809) pre-stored audio data to texts;
determining (811) whether the received search word is included in the converted texts to search for audio data corresponding to the search word; and
displaying (813) a search result.

9. The method of claim 1, wherein the preview data is configured by one of a text, an image, and a video.

10. An apparatus for managing audio data in an electronic device, the apparatus comprising:
a display unit (131) for displaying an image;
a storage unit (120) for storing preview data of audio data; and
a controller (110) configured to
convert at least a part of audio data to a text,
store the converted text in the storage unit as preview data of the audio data,
add talker information about at least one talker associated with the audio data to the preview data and
control the display unit to display the preview data by classifying each talker according to the talker information in response to a request for a preview of the audio data, wherein the electronic device provides a phonebook function for showing a phonebook image, and
wherein the controller recognizes a talker through a talker recognition function or a phone number, adds a phonebook image of the recognized talker as information related to the talker to the preview data.

11. The apparatus of claim 10, wherein, when at least the part of the audio data comprising words is converted to the text, the controller analyzes a tone of the audio data and stores the converted texts distinguished by respective talkers according to a result of the analysis of the tone of the audio data.

12. The apparatus of claim 10, wherein, when a request for changing a filename of particular audio data or a request for setting a filename of recorded audio data is detected, the controller converts at least a part of the particular audio data or the recorded audio data to a text and displays the converted text, detects a selection of a part of the displayed text, and changes the filename of the particular audio data into the selected part of the text or sets the selected part of the text as the filename of the recorded audio data.

13. The apparatus of claim 10, wherein, when a search mode is activated, the controller receives a search word, converts one or more audio data stored in the storage unit to texts, determines whether the received search word is included in the converted texts to search for audio data corresponding to the search word, and displays a search result.

## Patentansprüche

1. Verfahren zum Verwalten von Audiodaten in einer elektronischen Vorrichtung, wobei das Verfahren Folgendes umfasst:
Umwandeln (205) von mindestens einem Teil von Audiodaten in einen Text;
Speichern (211) des umgewandelten Textes als Vorschaudaten der Audiodaten;
Hinzufügen von Sprecherinformationen über mindestens einen Sprecher, der mit den Audiodaten assoziiert ist, zu den Vorschaudaten; und
Anzeigen der Vorschaudaten durch Klassifizieren jedes Sprechers gemäß den Sprecherinformationen als Reaktion auf eine Anforderung nach einer Vorschau der Audiodaten,
wobei die elektronische Vorrichtung eine Telefonbuchfunktion zum Zeigen eines Telefonbuchbildes bereitstellt und wobei das Hinzufügen der Informationen in Bezug auf den Sprecher Folgendes umfasst:
Erkennen eines Sprechers durch eine Sprechererkennungsfunktion oder eine Telefonnummer, und
Hinzufügen des Telefonbuchbildes des erkannten Sprechers zu den Vorschaudaten als die Informationen in Bezug auf den Sprecher.

2. Verfahren nach Anspruch 1, wobei das Speichern des umgewandelten Textes als die Vorschaudaten der Audiodaten Folgendes umfasst:
Anzeigen (207) des umgewandelten Textes;
Bestimmen (209), ob der angezeigte Text als die Vorschaudaten der Audiodaten gespeichert werden soll, gemäß einer Eingabe eines Benutzers; und
wenn bestimmt wird, den angezeigten Text als die Vorschaudaten (209-YES) zu speichern, Speichern (211) des angezeigten Textes als die Vorschaudaten der Audiodaten.

3. Verfahren nach Anspruch 2, wobei das Umwandeln von mindestens dem Teil der Audiodaten, der Wörter umfasst, in den Text das Analysieren eines Tons der Audiodaten zum Unterscheiden von einem oder mehreren Sprechern umfasst, die die Wörter ausdrücken; und
wobei das Speichern des angezeigten Textes als die Vorschaudaten der Audiodaten das Speichern des umgewandelten Textes umfasst, der von den betreffenden Sprechern gemäß einem Ergebnis der Analyse des Tons der Audiodaten unterschieden wird.

4. Verfahren nach Anspruch 3, wobei das Speichern des umgewandelten Textes, der von den betreffenden Sprechern unterschieden wird, das Hinzufügen von Informationen in Bezug auf den Sprecher zu den Vorschaudaten umfasst.

5. Verfahren nach Anspruch 1, welches ferner, wenn eine Wiedergabe der Audiodaten beendet oder gestoppt wird, bevor die Wiedergabe abgeschlossen ist, das Umwandeln von Audiodaten in einem vorbestimmten Abschnitt ab einer Position, an der die Wiedergabe beendet oder gestoppt wird, in einen Text umfasst, um die Vorschaudaten zu aktualisieren.

6. Verfahren nach Anspruch 1, welches ferner Folgendes umfasst:
Erkennen (605) einer Anforderung zum Ändern eines Dateinamens besonderer Audiodaten oder einer Anforderung zum Festlegen eines Dateinamens aufgezeichneter Audiodaten;
Umwandeln von mindestens einem Teil der besonderen Audiodaten oder der aufgezeichneten Audiodaten in einen Text und Anzeigen (609) des umgewandelten Textes;
Erkennen (615) einer Auswahl eines Teils des angezeigten Textes; und
Ändern (619) des Dateinamens der besonderen Audiodaten in den ausgewählten Teil des Textes oder Festlegen des ausgewählten Teils des Textes als den Dateinamen der aufgezeichneten Audiodaten.

7. Verfahren nach Anspruch 6, wobei das Umwandeln von mindestens dem Teil der besonderen Audiodaten oder der aufgezeichneten Audiodaten in den Text und das Anzeigen des umgewandelten Textes das Umwandeln von Audiodaten in einem vorbestimmten Abschnitt in einen Text gemäß einer Bewegung eines Wiedergabebalkens oder eines Berührungsereignisses umfasst, das auf einem visualisierten Bild der Audiodaten erkannt wird.

8. Verfahren nach Anspruch 1, welches ferner Folgendes umfasst:
Empfangen (801) einer Anforderung zum Aktivieren eines Suchmodus;
Empfangen (805, 807) eines Suchworts und einer Suchanforderung;
Umwandeln (809) vorher gespeicherter Audiodaten in Texte;
Bestimmen (811), ob das empfangene Suchwort in den umgewandelten Texten enthalten ist, um nach Audiodaten zu suchen, die dem Suchwort entsprechen; und
Anzeigen (813) eines Suchergebnisses.

9. Verfahren nach Anspruch 1, wobei die Vorschaudaten durch einen Text, ein Bild oder ein Video konfiguriert sind.

10. Vorrichtung zum Verwalten von Audiodaten in einer elektronischen Vorrichtung, wobei die Vorrichtung Folgendes umfasst:
eine Anzeigeeinheit (131) zum Anzeigen eines Bildes;
eine Speichereinheit (120) zum Speichern von Vorschaudaten von Audiodaten; und
eine Steuerung (110), die konfiguriert ist zum
Umwandeln von mindestens einem Teil von Audiodaten in einen Text,
Speichern des umgewandelten Textes in der Speichereinheit als Vorschaudaten der Audiodaten,
Hinzufügen von Sprecherinformationen über mindestens einen Sprecher, der mit den Audiodaten assoziiert ist, zu den Vorschaudaten und
Steuern der Anzeigeeinheit, um die Vorschaudaten durch Klassifizieren jedes Sprechers gemäß den Sprecherinformationen als Reaktion auf eine Anforderung nach einer Vorschau der Audiodaten anzuzeigen, wobei die elektronische Vorrichtung eine Telefonbuchfunktion zum Zeigen eines Telefonbuchbildes bereitstellt, und
wobei die Steuerung einen Sprecher durch eine Sprechererkennungsfunktion oder eine Telefonnummer erkennt, ein Telefonbuchbild des erkannten Sprechers als Informationen in Bezug auf den Sprecher zu den Vorschaudaten hinzufügt.

11. Vorrichtung nach Anspruch 10, wobei, wenn mindestens der Teil der Audiodaten, der Wörter umfasst, in den Text umgewandelt wird, die Steuerung einen Ton der Audiodaten analysiert und die umgewandelten Texte speichert, die von betreffenden Sprechern gemäß einem Ergebnis der Analyse des Tons der Audiodaten unterschieden werden.

12. Vorrichtung nach Anspruch 10, wobei, wenn eine Anforderung zum Ändern eines Dateinamens besonderer Audiodaten oder eine Anforderung zum Festlegen eines Dateinamens aufgezeichneter Audiodaten erkannt wird, die Steuerung mindestens einen Teil der besonderen Audiodaten oder der aufgezeichneten Audiodaten in einen Text umwandelt und den umgewandelten Text anzeigt, eine Auswahl eines Teils des angezeigten Textes erkennt und den Dateinamen der besonderen Audiodaten in den ausgewählten Teil des Textes ändert oder den ausgewählten Teil des Textes als den Dateinamen der aufgezeichneten Audiodaten festlegt.

13. Vorrichtung nach Anspruch 10, wobei, wenn ein Suchmodus aktiviert wird, die Steuerung ein Suchwort empfängt, ein oder mehrere Audiodaten, die in der Speichereinheit gespeichert werden, in Texte umwandelt, bestimmt, ob das empfangene Suchwort in den umgewandelten Texten enthalten ist, um nach Audiodaten zu suchen, die dem Suchwort entsprechen, und ein Suchergebnis anzeigt.

## Revendications

1. Procédé de gestion de données audio dans un dispositif électronique, le procédé comprenant :
convertir (205) au moins une partie de données audio en un texte ;
stocker (211) le texte converti en tant que données de prévisualisation des données audio ;
ajouter des informations de locuteur concernant au moins un locuteur associé aux données audio aux données de prévisualisation ; et
afficher les données de prévisualisation en classant chaque locuteur selon les informations de locuteur en réponse à une demande de prévisualisation des données audio,
où le dispositif électronique fournit une fonction de répertoire téléphonique permettant de montrer une image de répertoire téléphonique et où l'ajout des informations associées au locuteur comprend :
reconnaître un locuteur à l'aide d'une fonction de reconnaissance de locuteur ou d'un numéro de téléphone, et
ajouter l'image de répertoire téléphonique du locuteur reconnu aux données de prévisualisation en tant qu'informations associées au locuteur.

2. Procédé selon la revendication 1, où le stockage du texte converti en tant que données de prévisualisation des données audio comprend :
afficher (207) le texte converti ;
déterminer (209) s'il faut stocker le texte affiché en tant que données de prévisualisation des données audio selon une entrée d'un utilisateur ; et
lorsqu'il est déterminé de stocker le texte affiché en tant que données de prévisualisation (209-OUI), stocker (211) le texte affiché en tant que données de prévisualisation des données audio.

3. Procédé selon la revendication 2, où la conversion d'au moins la partie des données audio comprenant des mots en texte comprend l'analyse d'un ton des données audio pour distinguer un ou plusieurs locuteurs exprimant les mots ; et
où le stockage du texte affiché en tant que données de prévisualisation des données audio comprend le stockage des textes convertis distingués par les locuteurs respectifs selon un résultat de l'analyse du ton des données audio.

4. Procédé selon la revendication 3, où le stockage du texte converti distingué par les locuteurs respectifs comprend l'ajout d'informations associées au locuteur aux données de prévisualisation.

5. Procédé selon la revendication 1, comprenant en outre, lorsqu'une reproduction des données audio est terminée ou arrêtée avant la fin de la reproduction, convertir des données audio dans une section prédéterminée à partir d'une position où la reproduction est terminée ou arrêtée à un texte, de manière à mettre à jour les données de prévisualisation.

6. Procédé selon la revendication 1, comprenant en outre :
détecter (605) une demande de changement d'un nom de fichier de données audio particulières ou une demande de définition d'un nom de fichier de données audio enregistrées ;
convertir au moins une partie des données audio particulières ou des données audio enregistrées en un texte et afficher (609) le texte converti ;
détecter (615) une sélection d'une partie du texte affiché ; et
changer (619) le nom de fichier des données audio particulières dans la partie sélectionnée du texte ou définir la partie sélectionnée du texte en tant que nom de fichier des données audio enregistrées.

7. Procédé selon la revendication 6, où la conversion d'au moins la partie des données audio particulières ou des données audio enregistrées en texte et l'affichage du texte converti comprend la conversion de données audio dans une section prédéterminée en un texte selon un mouvement d'une barre de reproduction ou un événement tactile détecté sur une image visualisée des données audio.

8. Procédé selon la revendication 1, comprenant en outre :
recevoir (801) une demande d'activation d'un mode de recherche ;
recevoir (805, 807) un mot de recherche et une demande de recherche ;
convertir (809) des données audio pré-stockées en textes ;
déterminer (811) si le mot de recherche reçu est inclus dans les textes convertis pour rechercher des données audio correspondant au mot de recherche ; et
afficher (813) un résultat de recherche.

9. Procédé selon la revendication 1, où les données de prévisualisation sont configurées par l'un parmi un texte, une image et une vidéo.

10. Appareil de gestion de données audio dans un dispositif électronique, l'appareil comprenant :
une unité d'affichage (131) pour afficher une image ;
une unité de stockage (120) pour stocker des données de prévisualisation de données audio ; et
un contrôleur (110) configuré pour
convertir au moins une partie de données audio en un texte,
stocker le texte converti dans l'unité de stockage en tant que données de prévisualisation des données audio,
ajouter des informations de locuteur concernant au moins un locuteur associé aux données audio aux données de prévisualisation et
commander l'unité d'affichage d'afficher les données de prévisualisation en classant chaque locuteur selon les informations de locuteur en réponse à une demande de prévisualisation des données audio,
où le dispositif électronique fournit une fonction de répertoire téléphonique permettant de montrer une image de répertoire téléphonique, et
où le contrôleur reconnaît un locuteur à l'aide d'une fonction de reconnaissance de locuteur ou d'un numéro de téléphone, et ajoute une image de répertoire téléphonique du locuteur reconnu en tant qu'informations associées au locuteur aux données de prévisualisation.

11. Appareil selon la revendication 10, où, lorsqu'au moins la partie des données audio comprenant des mots est convertie en texte, le contrôleur analyse un ton des données audio et stocke les textes convertis distingués par les locuteurs respectifs selon un résultat de l'analyse du ton des données audio.

12. Appareil selon la revendication 10, où, lorsqu'une demande de changement d'un nom de fichier de données audio particulières ou une demande de définition d'un nom de fichier de données audio enregistrées est détectée, le contrôleur convertit au moins une partie des données audio particulières ou des données audio enregistrées en un texte et affiche le texte converti, détecte une sélection d'une partie du texte affiché, et change le nom de fichier des données audio particulières dans la partie sélectionnée du texte ou définit la partie sélectionnée du texte en tant que nom de fichier des données audio enregistrées.

13. Appareil selon la revendication 10, où, lorsqu'un mode de recherche est activé, le contrôleur reçoit un mot de recherche, convertit une ou plusieurs données audio stockées dans l'unité de stockage en textes, détermine si le mot de recherche reçu est inclus dans les textes convertis pour rechercher des donnés audio correspondant au mot de recherche, et affiche un résultat de recherche.
